# EUROPEAN PATENT APPLICATION

(11) **EP 4 822 838 A2**
(43) Date of publication of application: **14.10.2026**
(21) Application number: 26199257.2
(22) Date of filing: 18.08.2026
(51) Int. Cl.: H01M 50/107, H01M 50/152, H01M 50/167, H01M 50/528, H01M 50/533, H01M 50/536, H01M 50/586

(54) **CYLINDRICAL BATTERY AND ELECTRICAL DEVICE**

(30) Priority: 19.08.2025 CN 202511162005
(71) Applicant: Xiamen Ampace Technology Limited, Xiamen City, Fujian Province 361000 (CN)
(72) Inventor: HU, Ruiyuan, Xiamen City, Fujian Province, 361000 (CN)
(74) Representative: Kraus & Lederer PartGmbB

(57) **Abstract**

A cylindrical battery includes a housing, an electrode assembly, an end cap assembly, a current collecting disc, and a conductive member. The housing includes a sidewall. The sidewall includes a sidewall body and a protrusion. The protrusion protrudes from an inner surface of the sidewall body. The electrode assembly is accommodated in the housing. The sidewall body surrounds the electrode assembly. The current collecting disc is connected to the electrode assembly. In an axial direction of the cylindrical battery, a part of the current collecting disc is located between the electrode assembly and the protrusion. The conductive member includes a first conductive portion, a second conductive portion, and a bent portion. The first conductive portion is located on one side of the current collecting disc, the side facing the end cap assembly. The first conductive portion is welded to the current collecting disc to form a first weld portion. At least a part of the second conductive portion is located between the first conductive portion and the end cap assembly. The second conductive portion is connected to the end cap assembly. The bent portion connects the first conductive portion and the second conductive portion.

## Description

### TECHNICAL FIELD

This application relates to the field of batteries, and in particular, to a cylindrical battery, a battery module, and an electrical device.

### BACKGROUND

A rechargeable battery cell is a battery cell that is reusable after the active material is activated by charging the battery cell that has been discharged. Rechargeable battery cells are widely used in electronic devices such as mobile phones, laptop computers, and unmanned aerial vehicles.

A battery pack typically includes a plurality of battery cells to meet the voltage requirement of electronic devices. Throughout the development of battery technology, how to satisfy the special performance requirements of batteries while simplifying the assembly process of battery packs has remained a focus of research in the industry.

### SUMMARY

This application provides a cylindrical battery, a battery module, and an electrical device to improve the stability of a current collecting disc.

According to a first aspect, this application provides a cylindrical battery. The cylindrical battery includes a housing, an electrode assembly, an end cap assembly, a current collecting disc, and a conductive member. The housing includes a sidewall. The sidewall includes a sidewall body and a protrusion. The protrusion protrudes from an inner surface of the sidewall body. The electrode assembly is accommodated in the housing. The sidewall body surrounds the electrode assembly. The end cap assembly is connected to the sidewall. The current collecting disc is connected to the electrode assembly. In an axial direction of the cylindrical battery, a part of the current collecting disc is located between the electrode assembly and the protrusion. The conductive member includes a first conductive portion, a second conductive portion, and a bent portion. The first conductive portion is located on one side of the current collecting disc, the side facing the end cap assembly. The first conductive portion is welded to the current collecting disc to form a first weld portion. At least a part of the second conductive portion is located between the first conductive portion and the end cap assembly. The second conductive portion is connected to the end cap assembly. The bent portion connects the first conductive portion and the second conductive portion.

By providing the conductive member, this application implements electrical connection between the end cap assembly and the current collecting disc. The conductive member and the current collecting disc are separately formed and connected by welding, and the conductive member is located on one side of the current collecting disc, the side facing the end cap assembly. Therefore, the conductive member does not need to be connected to an outer peripheral edge of the current collecting disc, thereby allowing the shape design of the current collecting disc to be more flexible, improving a current-carrying capacity of the current collecting disc, increasing an overlapping area between the current collecting disc and the protrusion in the axial direction, and improving stability of the current collecting disc.

In one or more optional embodiments, in a radial direction of the cylindrical battery, the first weld portion is spaced apart from an outer peripheral edge of the current collecting disc. This arrangement reduces the risk of thermal damage to the electrode assembly caused by a weld outreach to the outside of the current collecting disc due to process tolerances when the first conductive portion and the current collecting disc are welded to form a first weld portion.

In one or more optional embodiments, the current collecting disc is circular. In the axial direction, an outer peripheral edge of the current collecting disc is located between the protrusion and the electrode assembly. With the current collecting disc being in the shape of a circle, because the outer peripheral edge of the current collecting disc is located between the protrusion and the electrode assembly in the axial direction, a retaining area in which the protrusion retains the current collecting disc in the circumferential direction is increased, thereby improving the uniformity of a retaining force applied to the current collecting disc by the protrusion.

In one or more optional embodiments, the current collecting disc is a regular polygon. In the axial direction, each corner of the current collecting disc is located between the protrusion and the electrode assembly. With the current collecting disc being in the shape of a regular polygon, because each corner of the current collecting disc is located between the protrusion and the electrode assembly in the axial direction, the uniformity of the retaining force exerted by the protrusion on the current collecting disc in the circumferential direction is improved. A relatively large clearance is provided between the current collecting disc and the sidewall, thereby making it convenient for the electrolyte to rapidly infiltrate the electrode assembly during electrolyte injection.

In one or more optional embodiments, the cylindrical battery includes an insulation member. The insulation member includes a first insulation portion and a second insulation portion. The first insulation portion surrounds the electrode assembly and is bonded to the electrode assembly. The second insulation portion is connected to an end portion, close to the end cap assembly, of the first insulation portion and is bent relative to the first insulation portion. In the axial direction, a part of the current collecting disc is located between the second insulation portion and the electrode assembly, and a part of the second insulation portion is located between the protrusion and the current collecting disc. The risk of electrical conduction between the electrode assembly and the sidewall is reduced using the first insulation portion, and the risk of electrical conduction between the electrode assembly and the protrusion is reduced using the second insulation portion.

In one or more optional embodiments, in the axial direction, an orthographic projection of the second insulation portion is spaced apart from an orthographic projection of the first weld portion. The first weld portion and the second insulation portion are arranged in a staggered manner, thereby reducing the risk that a sharp profile of the first weld portion punctures the second insulation portion, and improving the service life and insulation reliability of the second insulation portion.

In one or more optional embodiments, the protrusion is in contact with the second insulation portion. The protrusion and the current collecting disc can clamp the second insulation portion from two opposite sides, thereby reducing the risk of slipping of the second insulation portion when the cylindrical battery is vibrating, and improving insulation reliability.

In one or more optional embodiments, the current collecting disc is welded to the electrode assembly to form a plurality of second weld portions. The plurality of second weld portions are spaced apart along a circumferential direction of the cylindrical battery. In the circumferential direction, the first weld portion is located between two adjacent second weld portions. The plurality of second weld portions spaced apart along the circumferential direction can improve the connection strength between the current collecting disc and the electrode assembly, and enhance the current-carrying capacity between the current collecting disc and the electrode assembly. In this embodiment, a distance between the first weld portion and the second weld portion is reduced, the current transmission path is shortened, the resistance is reduced, and the current-carrying capacity is enhanced. By spacing the first weld portion apart from the second weld portion, this application reduces heat accumulation during welding, and reduces the risk of thermal damage to the electrode assembly.

In one or more optional embodiments, the current collecting disc is provided with a plurality of first through-holes. In the circumferential direction, each of the first through-holes is located between two adjacent second weld portions. No first through-hole is provided between two second weld portions adjacent to the first weld portion. During electrolyte injection into the cylindrical battery, the electrolyte can pass through the current collecting disc by way of the first through-hole, thereby alleviating the degree to which the current collecting disc obstructs the electrolyte, improving the electrolyte injection efficiency, and improving the infiltration effect. Forming the first through-hole reduces an area of a part of the current collecting disc, the part being located between two second weld portions. In this embodiment, no first through-hole is provided between the two second weld portions adjacent to the first weld portion, thereby increasing the area of the first weld portion to improve the current-carrying capacity while also reducing the risk of thermal damage to the electrode assembly caused by welding misalignment.

In one or more optional embodiments, an area of the first weld portion is S1, a total area of the plurality of second weld portions is S2, and 0.3 ≤ S1/S2 ≤ 2.5. By setting the value of S1/S2 to be 0.3 to 2.5, these embodiments reduce the difference in current-carrying capacity between the first weld portion and the second weld portion, thereby mitigating heat concentration.

In one or more optional embodiments, Vickers hardness of the current collecting disc is greater than Vickers hardness of the conductive member. Because the current collecting disc is subjected to a retaining force exerted by the protrusion, the increase in the Vickers hardness of the current collecting disc can reduce deformation of the current collecting disc under the retaining force of the protrusion. By reducing the Vickers hardness of the conductive member, this application makes the conductive member more bendable and deformable, thereby facilitating the formation of the first conductive portion, the second conductive portion, and the bent portion.

In one or more optional embodiments, a thickness of the current collecting disc is less than a thickness of the conductive member. Because the current collecting disc is of a relatively high level in Vickers hardness and deformation resistance, the thickness of the current collecting disc can be reduced while the strength of the current collecting disc meets requirements, thereby reducing the space occupied by the current collecting disc in the axial direction and increasing the energy density. The thickness of the conductive member is greater than the thickness of the current collecting disc, thereby improving the current-carrying capacity of the conductive member.

In one or more optional embodiments, the thickness of the current collecting disc is 0.1 mm to 0.2 mm. In this embodiment, the thickness of the current collecting disc is set to be greater than or equal to 0.1 mm, thereby reducing deformation of the current collecting disc under the retaining force exerted by the protrusion. In this embodiment, the thickness of the current collecting disc is set to be less than or equal to 0.2 mm, thereby reducing the space occupied by the current collecting disc in the axial direction and increasing the energy density.

In one or more optional embodiments, the conductive member is made of 1xxx series aluminum, and the current collecting disc is made of 3xxx series aluminum or 5xxx series aluminum. With the conductive member being made of 1xxx series aluminum that is of higher conductivity, lower strength, and higher flexibility, the conductive member is less prone to fracture during bending, and generates less heat, thereby meeting the requirements of higher-rate discharge. The current collecting disc is made of 3xxx series aluminum or 5xxx series aluminum, so that the Vickers hardness of the current collecting disc is relatively high.

In one or more optional embodiments, a material of the current collecting disc is identical to a material of the conductive member. By using the same material for the current collecting disc and the conductive member, this application reduces the difficulty of welding the first conductive portion to the current collecting disc, and improves the welding quality.

In one or more optional embodiments, a thickness of the current collecting disc is greater than a thickness of the conductive member. Increasing the thickness of the current collecting disc can improve the current-carrying capacity and structural strength of the current collecting disc. During crimp-sealing, the thicker current collecting disc can be less deformed when the protrusion presses against the current collecting disc.

In one or more optional embodiments, the electrode assembly is provided with a central hole, the current collecting disc is provided with a second through-hole, and the first conductive portion is provided with a third through-hole. In the axial direction, at least a part of the second through-hole is located between the central hole and the third through-hole. When the cylindrical battery is thermally runaway, the gas generated inside the electrode assembly can be expelled through the central hole, the second through-hole, and the third through-hole, thereby reducing the risk of explosion of the cylindrical battery. The above positional arrangement can shorten the path of expelling the gas through the central hole, the second through-hole, and the third through-hole, thereby alleviating the problem that the conductive member impedes internal gas flow and gas pressure transmission, increasing the gas exhausting rate, enabling the vent plate and the rupture disc to respond rapidly, and reducing the safety risk of the cylindrical battery.

According to a second aspect, this application provides a battery module. The battery module includes the cylindrical battery according to any one of the embodiments in the first aspect.

According to a third aspect, this application provides an electrical device. The electrical device includes the cylindrical battery according to any one of the embodiments in the first aspect.

### BRIEF DESCRIPTION OF DRAWINGS

The following describes features, advantages, and technical effects of exemplary embodiments of this application with reference to accompanying drawings.
FIG. 1 is a schematic structural diagram of a cylindrical battery according to some embodiments of this application;
FIG. 2 is a schematic front view of the cylindrical battery shown in FIG. 1;
FIG. 3 is a schematic cross-sectional view of the cylindrical battery shown in FIG. 2 taken along a T-T line;
FIG. 4 is an enlarged schematic diagram of a boxed region A shown in FIG. 3;
FIG. 5 is a schematic cross-sectional view of a current collecting disc and a conductive member of the cylindrical battery shown in FIG. 2 taken along a T-T line;
FIG. 6 is a partial cross-sectional view of a cylindrical battery according to some embodiments of this application;
FIG. 7 is a schematic top view of an electrode assembly, a current collecting disc, and a conductive member of the cylindrical battery shown in FIG. 1;
FIG. 8 is a schematic top view of a current collecting disc of a cylindrical battery according to other embodiments of this application;
FIG. 9 is a schematic structural diagram of a battery module according to some embodiments of this application; and
FIG. 10 is a schematic structural diagram of an electrical device according to some embodiment of this application.

### List of reference signs:

| | | | |
|---|---|---|---|
| 1. | cylindrical battery | 50. | conductive member |
| 10. | housing | 51. | first conductive portion |
| 11. | sidewall | 511. | first weld portion |
| 111. | sidewall body | 512. | third through-hole |
| 112. | protrusion | 52. | second conductive portion |
| 112a. | recess | 53. | bent portion |
| 113. | fixing portion | 60. | insulation member |
| 12. | bottom wall | 61. | first insulation portion |
| 13. | opening | 62. | second insulation portion |
| 20. | electrode assembly | 1000. | battery module |
| 21. | central hole | 2000. | electrical device |
| 30. | end cap assembly | T1. | thickness of current collecting disc |
| 31. | end cap | T2. | thickness of conductive member |
| 32. | rupture disc | X. | axial direction |
| 33. | vent plate | | |
| 331. | vent plate recess | | |
| 332. | third weld portion | | |
| 34. | insulation structure | | |
| 40. | current collecting disc | | |
| 41. | corner | | |
| 42. | second weld portion | | |
| 43. | first through-hole | | |
| 44. | second through-hole | | |

### DETAILED DESCRIPTION

To make the objectives, technical solutions, and advantages of the embodiments of this application clearer, the following gives a clear description of the technical solutions in some embodiments of this application with reference to the drawings in some embodiments of this application. Evidently, the described embodiments are merely a part rather than all of the embodiments of this application.

The terms such as "first", "second", and "third" used in the specification, claims, and brief description of drawings herein are intended to distinguish between different items, but are not intended to describe a specific sequence or order of precedence. In some embodiments of this application, the same reference numeral denotes the same component. For brevity, detailed descriptions of the same component are omitted in a different embodiment.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments.

In the description of this application, unless otherwise expressly specified and defined, the terms such as "mount" and "connect" need to be understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

In embodiments of this application, the term "parallel" includes not only absolute parallelism, but also approximate parallelism conventionally known in engineering. The term "perpendicular" or "vertical" includes not only absolute perpendicularity, but also approximate perpendicularity conventionally known in engineering. As an example, if the angle between two directions is 80° to 90°, the two directions may be deemed perpendicular; and, if the angle between two directions is 0° to 10°, the two directions may be deemed parallel.

The following describes a cylindrical battery of this application with reference to accompanying drawings.

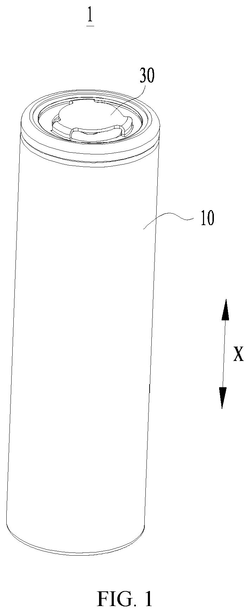

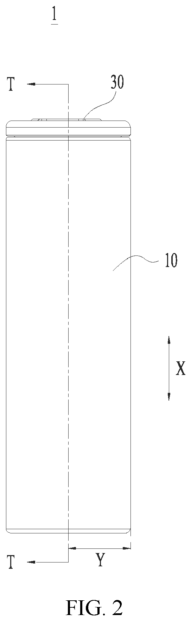

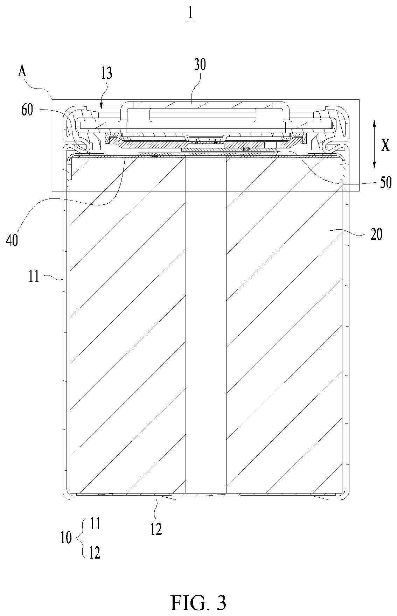

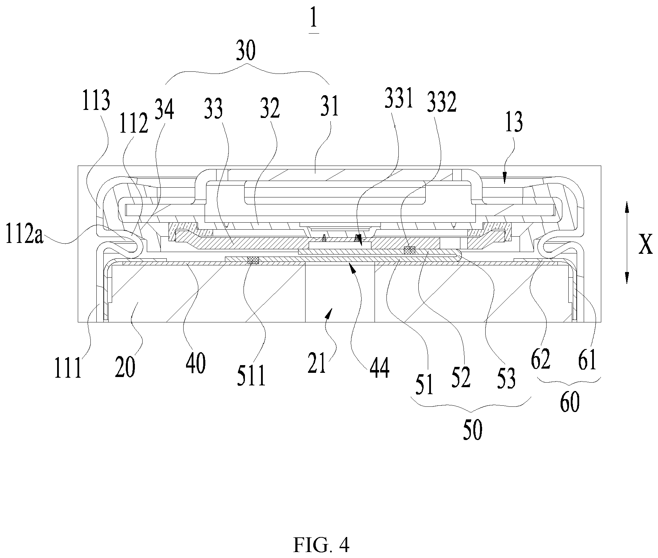

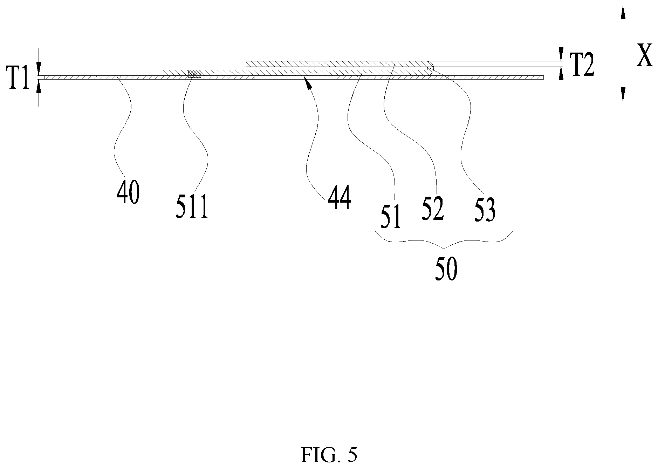

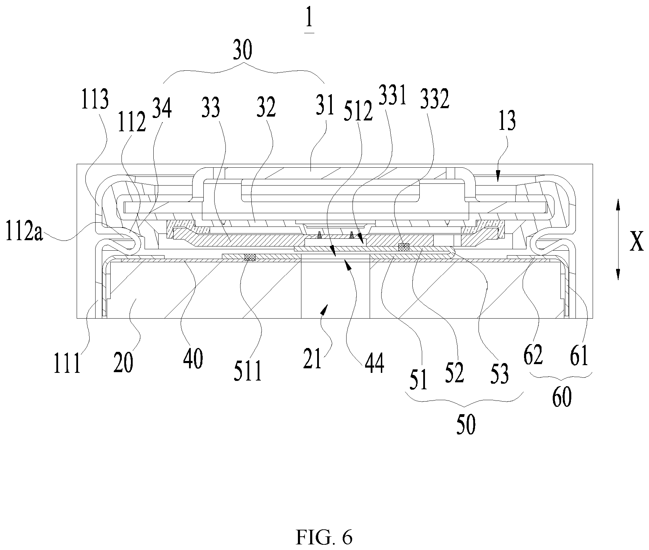

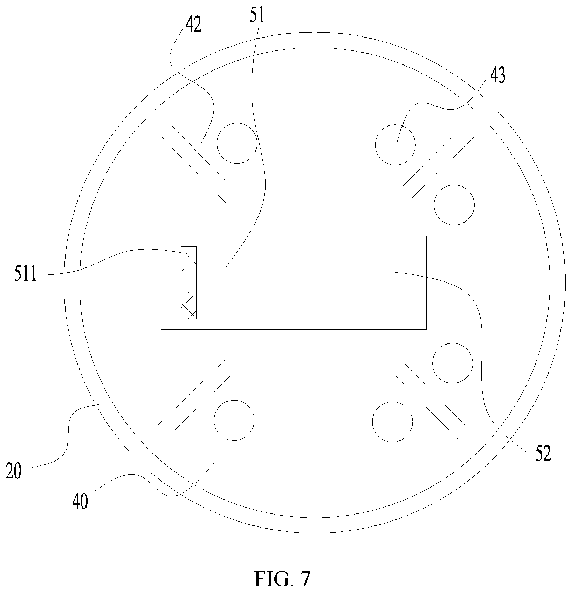

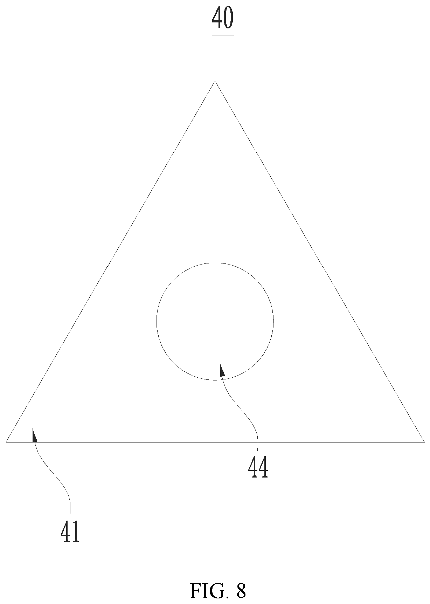

Referring to FIG. 1 to FIG. 8, an embodiment of this application provides a cylindrical battery 1. The cylindrical battery 1 may be a lithium-ion battery, a sodium-lithium-ion battery, a sodium-ion battery, a magnesium-ion battery, or another type of battery.

As an example, the cylindrical battery 1 may be an 18650 battery, a 21700 battery, a 46800 battery, a 49480 battery, a 46950 battery, or another type of cylindrical battery.

In some embodiments, the cylindrical battery 1 is a secondary battery. The secondary battery is reusable through activation of an active material in the battery by charging the battery that has been discharged.

In some embodiments, the cylindrical battery 1 includes a housing 10 and an electrode assembly 20 accommodated in the housing 10.

In some embodiments, the electrode assembly 20 includes a first electrode plate and a second electrode plate of opposite polarities. During charging and discharging of the cylindrical battery 1, active ions (such as lithium ions) are shuttled between the first electrode plate and the second electrode plate by intercalation and deintercalation. Of the first electrode plate and the second electrode plate, one is a positive electrode plate, and the other is a negative electrode plate.

In some embodiments, the electrode assembly 20 includes a separator disposed between the first electrode plate and the second electrode plate. The separator electrically insulates the first electrode plate from the second electrode plate. The separator can reduce the risk of a short circuit between the positive electrode plate and the negative electrode plate while allowing the active ions to pass through.

In some embodiments, the first electrode plate, the separator, and the second electrode plate are wound together.

In some embodiments, the first electrode plate includes a first current collector and a first active material layer. The first current collector includes a first coated region coated with the first active material layer and a first bare foil region not coated with the first active material layer. The first coated region and the first bare foil region may be arranged along an axial direction X of the cylindrical battery 1.

In some embodiments, the first bare foil region is wound into a plurality of turns.

In some embodiments, the first electrode plate includes a first tab. The first tab may be formed by flattening the first bare foil region by kneading or smoothing out. As an example, the first bare foil region may be compressed inward from the outside along a radial direction of the cylindrical battery 1, such that an end portion, far away from the first coated region, of the first bare foil region is bent to form a first tab.

In other embodiments, the first tab may be formed by press-flattening the first bare foil region. As an example, the first bare foil region may be compressed in the axial direction X of the electrode assembly 20 from one side of the first bare foil region, the side being far away from the first coated region, such that an end portion, far away from the first coated region, of the first bare foil region is bent to form a first tab.

In some embodiments, the second electrode plate includes a second current collector and a second active material layer. The second current collector includes a second coated region coated with the second active material layer and a second bare foil region not coated with the second active material layer. The second coated region and the second bare foil region may be arranged along the axial direction X of the cylindrical battery 1.

In some embodiments, the second bare foil region is wound into a plurality of turns.

In some embodiments, the second electrode plate includes a second tab. The second tab may be formed by flattening the second bare foil region by kneading or smoothing out. As an example, the second bare foil region may be compressed inward from the outside along a radial direction of the cylindrical battery 1, such that an end portion, far away from the second coated region, of the second bare foil region is bent to form a second tab.

In other embodiments, the second tab may be formed by press-flattening the second bare foil region. As an example, the second bare foil region may be compressed in the axial direction X of the electrode assembly 20 from one side of the second bare foil region, the side being far away from the second coated region, such that an end portion, far away from the second coated region, of the second bare foil region is bent to form a second tab.

In some embodiments, along the axial direction X of the cylindrical battery 1, the first tab and the second tab are located at two opposite ends of the electrode assembly 20.

In some embodiments, the housing 10 is provided with an opening 13 at one end along the axial direction X. The housing 10 defines an accommodation cavity. The opening 13 communicates with the accommodation cavity.

In some embodiments, the housing 10 includes a bottom wall 12 and a sidewall 11. The sidewall 11 is connected to the bottom wall 12 and surrounds the electrode assembly 20. An opening 13 is formed at one end of the sidewall 11, the end being far away from the bottom wall 12 along the axial direction X.

The bottom wall 12 and the sidewall 11 may be integrally formed. Alternatively, the bottom wall 12 and the sidewall 11 may be formed separately and connected by welding or another means.

In some embodiments, the cylindrical battery 1 includes an end cap assembly 30. The end cap assembly 30 is connected to the sidewall 11 and fits and covers the opening 13 of the housing 10. The end cap assembly 30 is configured to seal the opening 13 of the housing 10, so that a relatively enclosed accommodation space is defined between the housing 10 and the end cap assembly 30. The accommodation space is configured to accommodate components such as the electrode assembly 20 and an electrolyte.

In some embodiments, the bottom wall 12 and the end cap assembly 30 are arranged along the axial direction X of the cylindrical battery 1. The end cap assembly 30 and the bottom wall 12 are located on two opposite sides of the electrode assembly 20 respectively.

In some embodiments, the end cap assembly 30 is connected to, and electrically insulated from, the sidewall 11.

In some embodiments, the end cap assembly 30 includes an end cap 31, and the end cap 31 is connected to, and electrically insulated from, the sidewall 11.

In some embodiments, the housing 10 and the end cap 31 may be made of steel, aluminum, a composite metal, or another electrically conductive material. The housing 10 and the end cap 31 may be made of the same material or different materials.

In some embodiments, the first tab is connected to the end cap 31, and the second tab is connected to the bottom wall 12.

In some embodiments, the end cap assembly 30 includes an insulation structure 34. The insulation structure 34 is disposed between the end cap 31 and the sidewall 11. For example, the insulation structure 34 may be made of insulation rubber or ceramic.

In some embodiments, the sidewall 11 includes a sidewall body 111 and a protrusion 112. The sidewall body 111 is connected to the bottom wall 12. The protrusion 112 protrudes from an inner surface of the sidewall body 111. The inner surface referred to herein is a surface of the sidewall body 111, the surface facing the electrode assembly 20. In other words, in the radial direction of the cylindrical battery 1, the protrusion 112 protrudes relative to a surface of the sidewall body 111, the surface being close to the electrode assembly 20.

As an example, the protrusion 112 and the bottom wall 12 are connected to two opposite ends of the sidewall body 111, respectively.

As an example, the protrusion 112 extends one circumferential turn around the cylindrical battery 1. In some embodiments, the sidewall body 111 surrounds the electrode assembly 20. As an example, in the axial direction X, the sidewall body 111 may extend beyond a surface of the electrode assembly 20 on a side facing the end cap assembly 30.

In some embodiments, in the axial direction X, a part of the protrusion 112 is located between the electrode assembly 20 and the end cap assembly 30. In some examples, in a projection plane perpendicular to the axial direction X, a part of an orthographic projection of the protrusion 112 lies within both an orthographic projection of the electrode assembly 20 and an orthographic projection of the end cap assembly 30, and a remainder of the orthographic projection of the protrusion 112 lies outside the orthographic projection of the electrode assembly 20.

In some embodiments, in the axial direction X, at least a part of the protrusion 112 lies between the electrode assembly 20 and the insulation structure 34. Optionally, the protrusion 112 is in contact with the insulation structure 34.

In some embodiments, the sidewall 11 further includes a fixing portion 113. In the axial direction X, the fixing portion 113 is located on one side of the protrusion 112, the side facing away from the sidewall body 111. The protrusion 112 connects the fixing portion 113 and the sidewall body 111.

In some examples, the fixing portion 113 surrounds the end cap 31. A part of the fixing portion 113 is bent toward one side of the end cap 31, the side being far away from the protrusion 112. In the axial direction X, a part of the end cap 31 is located between the protrusion 112 and the fixing portion 113.

In some embodiments, an outer surface of the protrusion 112 is recessed relative to an outer surface of the sidewall body 111 to form a recess 112a. Specifically, the recess 112a is disposed on one side of the sidewall 11, the side facing away from the electrode assembly 20. The recess 112a corresponds in position to the protrusion 112. Further, the protrusion 112 is a solid structure, and the protrusion 112 is a solid structure that protrudes radially beyond the sidewall body 111, whereas the recess 112a is a cavity defined by the protrusion 112.

In some embodiments, the housing 10 includes a substrate and a nickel layer. The substrate is a main part of the housing 10. The nickel layer is disposed on an outer surface of the substrate to effectively isolate external corrosive media (such as moisture and salt spray), thereby improving the service life of the housing 10. Meanwhile, a part of an outer surface, facing away from the substrate, of the nickel layer defines the recess 112a.

In some embodiments, the cylindrical battery 1 includes a current collecting disc 40. The current collecting disc 40 is connected to the electrode assembly 20.

In some embodiments, the current collecting disc 40 is connected to a first tab.

In some embodiments, the current collecting disc 40 is welded to the first tab. As an example, the current collecting disc 40 is connected to the first tab by laser welding.

In some embodiments, in the axial direction X of the cylindrical battery, a part of the current collecting disc 40 is located between the electrode assembly 20 and the protrusion 112. When the cylindrical battery 1 is subjected to an external impact, the protrusion 112 limits movement of the current collecting disc 40, thereby reducing the vibration amplitude of the current collecting disc 40 and the electrode assembly 20, and reducing the risk of failure of the connection between the current collecting disc 40 and the electrode assembly 20.

In some embodiments, in the axial direction X of the cylindrical battery, a part of the current collecting disc 40 is located between the first tab and the protrusion 112.

In some embodiments, the cylindrical battery 1 includes a conductive member 50. The conductive member 50 includes a first conductive portion 51, a second conductive portion 52, and a bent portion 53. The first conductive portion 51 is located on one side of the current collecting disc 40, the side facing the end cap assembly 30. The first conductive portion 51 is welded to the current collecting disc 40 to form a first weld portion 511. At least a part of the second conductive portion 52 is located between the first conductive portion 51 and the end cap assembly 30. The second conductive portion 52 is connected to the end cap assembly 30. The bent portion 53 connects the first conductive portion 51 and the second conductive portion 52.

By providing the conductive member 50, this application implements electrical connection between the end cap assembly 30 and the current collecting disc 40. The conductive member 50 and the current collecting disc 40 are separately formed and connected by welding, and the conductive member 50 is located on one side of the current collecting disc 40, the side facing the end cap assembly 30. Therefore, the conductive member 50 does not need to be connected to an outer peripheral edge of the current collecting disc 40, thereby allowing the shape design of the current collecting disc 40 to be more flexible, improving a current-carrying capacity of the current collecting disc 40, increasing an overlapping area between the current collecting disc 40 and the protrusion 112 in the axial direction X, and improving stability of the current collecting disc 40.

In some embodiments, the first conductive portion 51 is laser-welded to the current collecting disc 40.

In some embodiments, the end cap assembly 30 further includes a rupture disc 32. The rupture disc 32 is connected to the end cap 31.

When the internal pressure of the cylindrical battery 1 exceeds an upper pressure limit that the rupture disc 32 can withstand, the internal pressure of the cylindrical battery 1 causes the rupture disc 32 to invert and burst in a direction away from the electrode assembly 20, thereby interrupting the electrical circuit and relieving the internal pressure, reducing the risk of explosion of the cylindrical battery 1 caused by an excessive internal pressure, and improving the safety performance of the cylindrical battery 1.

In some embodiments, the rupture disc 32 may be connected to the end cap 31 by welding, riveting, bonding, or another suitable connection manner.

In some embodiments, at least a part of the rupture disc 32 may be located between the end cap 31 and the electrode assembly 20.

In some embodiments, the rupture disc 32 is connected to the second conductive portion 52 and the end cap 31.

In some embodiments, a part of the rupture disc 32 is located between the end cap 31 and the electrode assembly 20, and another part of the rupture disc 32 is bent toward an outer side of the end cap 31, the outer side facing away from the electrode assembly 20, so as to wrap around the edge of the end cap 31. Optionally, the insulation structure 34 is disposed between the rupture disc 32 and the sidewall 11.

In some embodiments, the end cap assembly 30 includes a vent plate 33. The vent plate 33 is disposed between the second conductive portion 52 and the rupture disc 32. The vent plate 33 is connected to the second conductive portion 52 and the rupture disc 32. Through the vent plate 33, an electrical connection is implemented between the second conductive portion 52 and the rupture disc 32. The end cap 31 is electrically connected to the first tab through the rupture disc 32, the vent plate 33, the second conductive portion 52, the bent portion 53, the first conductive portion 51, and the current collecting disc 40 in sequence.

In some embodiments, the vent plate 33 may be provided with a vent plate opening. The vent plate opening may serve as a passage for gas flow, so that the gas inside the cylindrical battery 1 can act on the rupture disc 32 through the vent plate opening. In this way, the rupture disc 32 can invert when the internal pressure of the cylindrical battery 1 becomes excessively high, and become electrically disconnected from the vent plate 33, thereby reducing safety risks. When the rupture disc 32 inverts, a nicked part of the rupture disc is fractured, thereby forming a vent passage. The gas inside the cylindrical battery 1 is expelled to the outside through the vent passage to reduce safety risks.

In some embodiments, in the radial direction of the cylindrical battery 1, the first weld portion 511 is spaced apart from an outer peripheral edge of the current collecting disc 40. This arrangement reduces the risk of thermal damage to the electrode assembly caused by a weld outreach to the outside of the current collecting disc 40 due to process tolerances when the first conductive portion 51 and the current collecting disc 40 are welded to form a first weld portion 511.

In some embodiments, the current collecting disc 40 is circular. In the axial direction X, an outer peripheral edge of the current collecting disc 40 is located between the protrusion 112 and the electrode assembly 20. With the current collecting disc 40 being in the shape of a circle, because the outer peripheral edge of the current collecting disc 40 is located between the protrusion 112 and the electrode assembly 20 in the axial direction X, a retaining area in which the protrusion 112 retains the current collecting disc 40 in the circumferential direction is increased, thereby improving the uniformity of a retaining force applied to the current collecting disc 40 by the protrusion 112.

In some embodiments, the current collecting disc 40 is a regular polygon. In the axial direction X, each corner 41 of the current collecting disc 40 is located between the protrusion 112 and the electrode assembly 20. With the current collecting disc 40 being in the shape of a regular polygon, because each corner 41 of the current collecting disc 40 is located between the protrusion 112 and the electrode assembly 20 in the axial direction X, the uniformity of the retaining force exerted by the protrusion 112 on the current collecting disc 40 in the circumferential direction is improved.

As an example, the current collecting disc 40 is in the shape of an equilateral triangle or a square. A relatively large clearance is provided between the current collecting disc 40 and the sidewall 11, thereby making it convenient for the electrolyte to rapidly infiltrate the electrode assembly 20 during electrolyte injection.

In some embodiments, the cylindrical battery includes an insulation member 60. The insulation member 60 includes a first insulation portion 61 and a second insulation portion 62. The first insulation portion 61 surrounds the electrode assembly 20 and is bonded to the electrode assembly 20. The second insulation portion 62 is connected to an end portion, close to the end cap assembly 30, of the first insulation portion 61 and is bent relative to the first insulation portion 61. In the axial direction X, at least a part of the second insulation portion 62 is located between the electrode assembly 20 and the protrusion 112. The risk of electrical conduction between the electrode assembly 20 and the sidewall 11 is reduced using the first insulation portion 61, and the risk of electrical conduction between the electrode assembly 20 and the protrusion 112 is reduced using the second insulation portion 62.

In some embodiments, the first insulation portion 61 surrounds the first tab.

In some embodiments, the insulation member 60 includes adhesive tape.

In some embodiments, in the axial direction X, a part of the current collecting disc 40 is located between the second insulation portion 62 and the electrode assembly 20, and a part of the second insulation portion 62 is located between the protrusion 112 and the current collecting disc 40. By disposing a part of the second insulation portion 62 between the protrusion 112 and the current collecting disc 40, this application reduces the risk of electrical conduction between the protrusion 112 and the current collecting disc 40.

In some embodiments, the second insulation portion 62 is adhesively bonded to the current collecting disc 40 and the electrode assembly 20, thereby improving the stability of the current collecting disc 40.

In some embodiments, in the axial direction X, an orthographic projection of the second insulation portion 62 is spaced apart from an orthographic projection of the first weld portion 511. The first weld portion 511 and the second insulation portion 62 are arranged in a staggered manner, thereby reducing the risk that a sharp profile of the first weld portion 511 punctures the second insulation portion 62, and improving the service life and insulation reliability of the second insulation portion 62.

In some embodiments, the protrusion 112 is in contact with the second insulation portion 62. The protrusion 112 and the current collecting disc 40 can clamp the second insulation portion 62 from two opposite sides, thereby reducing the risk of slipping of the second insulation portion 62 when the cylindrical battery is vibrating, and improving insulation reliability.

In some embodiments, the current collecting disc 40 is in the shape of a circle or a regular polygon, so that the current collecting disc 40 is evenly stressed and stable. Therefore, no spacer for compacting and insulating the current collecting disc 40 is required between the protrusion 112 and the current collecting disc 40, thereby improving space utilization rate and increasing the energy density.

In some embodiments, the current collecting disc 40 is welded to the electrode assembly 20 to form a plurality of second weld portions 42. The plurality of second weld portions 42 are spaced apart along a circumferential direction of the cylindrical battery 1. The plurality of second weld portions 42 spaced apart along the circumferential direction can improve the connection strength between the current collecting disc 40 and the electrode assembly 20, and enhance the current-carrying capacity between the current collecting disc 40 and the electrode assembly 20.

In some embodiments, each second weld portion 42 is a rectilinear weld extending along the radial direction.

In some embodiments, the plurality of second weld portions 42 are rotationally symmetric about the center of the current collecting disc 40. In other examples, at least two second weld portions 42 form one weld group. A plurality of weld groups are rotationally symmetric about the center of the current collecting disc 40.

In some embodiments, the number of second weld portions 42 may be 4, 6, 8, or 12.

In some embodiments, the first weld portion 511 is located between two adjacent second weld portions 42 in the circumferential direction. In this embodiment, the distance between the first weld portion 511 and the second weld portion 42 is reduced, the current transmission path is shortened, the resistance is reduced, and the current-carrying capacity is enhanced. By spacing the first weld portion 511 apart from the second weld portion 42, this application reduces heat accumulation during welding, and reduces the risk of thermal damage to the electrode assembly.

In some embodiments, the current collecting disc 40 is provided with a plurality of first through-holes 43. In the circumferential direction, each of the first through-holes 43 is located between two adjacent second weld portions 42. No first through-hole 43 is provided between two second weld portions 42 adjacent to the first weld portion 511.

During electrolyte injection into the cylindrical battery, the electrolyte can pass through the current collecting disc 40 by way of the first through-hole 43, thereby alleviating the degree to which the current collecting disc 40 obstructs the electrolyte, improving the electrolyte injection efficiency, and improving the infiltration effect. Forming the first through-hole 43 reduces the area of a part of the current collecting disc 40, the part being located between two second weld portions 42. In this embodiment, no first through-hole 43 is provided between the two second weld portions 42 adjacent to the first weld portion 511, thereby increasing the area of the first weld portion 511 to improve the current-carrying capacity while also reducing the risk of thermal damage to the electrode assembly 20 caused by welding misalignment.

In some embodiments, the area of the first weld portion 511 is S1, a total area of the plurality of second weld portions 42 is S2, and 0.3 ≤ S1/S2 ≤ 2.5.

As an example, the S1/S2 ratio is 0.3, 0.5, 0.8, 1, 1.3, 1.5, 1.8, 2, 2.3, 2.5, or a value falling within a range defined by any two thereof.

It is noted that the number of first weld portions 511 may be one or more. When a plurality of first weld portions 511 are provided, S1 is the total area of the plurality of first weld portions 511.

By setting the value of S1/S2 to be 0.3 to 2.5, these embodiments reduce the difference in current-carrying capacity between the first weld portion 511 and the second weld portion 42, thereby mitigating heat concentration.

In some embodiments, each second weld portion 42 is linear. The length of the second welded portion 42 is 3 mm to 6 mm, and optionally 4 mm to 5 mm. The width of the second weld portion 42 is 200 µm to 300 µm, and optionally 250 µm to 280 µm.

In some embodiments, the first weld portion 511 is linear. The length of the first weld portion 511 is 3 mm to 6 mm, and the width of the first weld portion 511 is 1 mm to 3 mm.

Specifically, the length of the first weld portion 511 may be 3 mm, 4 mm, 5 mm, 6 mm, or a value falling within a range defined by any two thereof.

Specifically, in a direction perpendicular to the axial direction X and the length direction of the first weld portion 511, the width of the first weld portion 511 may be 1 mm, 2 mm, 3 mm, or a value falling within a range defined by any two thereof.

In some embodiments, the vent plate 33 is welded to the second conductive portion 52 to form a third weld portion 332.

In some embodiments, the vent plate 33 is provided with a vent plate recess 331 on one side facing the electrode assembly 20 in the axial direction X. The bottom wall of the vent plate recess 331 is welded to the rupture disc 32. When the rupture disc 32 inverts away from the electrode assembly 20 and rips apart the bottom wall of the vent plate recess 331, the electrical connection between the rupture disc 32 and the second conductive portion 52 is cut off to break the circuit and reduce safety risks.

In some embodiments, the third weld portion 332 is located on one side of the vent plate recess 331, the side being close to the bent portion 53, thereby shortening the current transmission path and reducing the resistance.

In some embodiments, in the axial direction X, a projection of the second conductive portion 52 coincides with at least a part of a projection of the vent plate recess 331. The second conductive portion 52 can at least partially cover the vent plate recess 331, thereby reducing the risk of electrolyte entering and impacting the vent plate recess 331. In addition, the second conductive portion 52 can block impurities that remain on the surface of the third weld portion 332, thereby reducing the risk of entry of the impurities into the electrode assembly 20, and improving the reliability of the cylindrical battery 1 in use.

In some embodiments, an end, far away from the bent portion 53, of the second conductive portion 52 is a free end. The free end and the third weld portion 332 are located on two opposite sides of the vent plate recess 331 respectively. The free end is not constrained by the vent plate 33. Therefore, during welding of the second conductive portion 52 to the vent plate 33, the free end can move freely to relieve welding stress.

In some embodiments, the Vickers hardness of the current collecting disc 40 is greater than Vickers hardness of the conductive member 50. Because the current collecting disc 40 is subjected to a retaining force exerted by the protrusion 112, the increase in the Vickers hardness of the current collecting disc 40 can reduce deformation of the current collecting disc 40 under the retaining force of the protrusion 112. By reducing the Vickers hardness of the conductive member 50, this application makes the conductive member 50 more bendable and deformable, thereby facilitating the formation of the first conductive portion 51, the second conductive portion 52, and the bent portion 53.

In some embodiments, the thickness T1 of the current collecting disc 40 is less than the thickness T2 of the conductive member 50. Because the current collecting disc 40 is of a relatively high level in Vickers hardness and deformation resistance, the thickness T1 of the current collecting disc 40 can be reduced while the strength of the current collecting disc 40 meets requirements, thereby reducing the space occupied by the current collecting disc 40 in the axial direction X and increasing the energy density. The thickness T2 of the conductive member 50 is greater than the thickness of the current collecting disc 40, thereby improving the current-carrying capacity of the conductive member 50.

In some embodiments, the thickness T1 of the current collecting disc 40 is 0.1 mm to 0.2 mm. Specifically, the thickness T1 of the current collecting disc 40 may be 0.1 mm, 0.12 mm, 0.14 mm, 0.16 mm, 0.18 mm, 0.2 mm, or a value falling within a range of 0.1 mm to 0.2 mm or a range defined by any two thereof.

In this embodiment, the thickness T1 of the current collecting disc 40 is set to be greater than or equal to 0.1 mm, thereby reducing deformation of the current collecting disc 40 under the retaining force exerted by the protrusion 112. In this embodiment, the thickness T1 of the current collecting disc 40 is set to be less than or equal to 0.2 mm, thereby reducing the space occupied by the current collecting disc 40 in the axial direction X and increasing the energy density.

In some embodiments, the thickness T2 of the conductive member 50 is 0.1 mm to 0.25 mm.

In this embodiment, the thickness T2 of the conductive member 50 is set to be greater than or equal to 0.1 mm, thereby increasing the current-carrying capacity of the conductive member 50 and reducing the heat generated by the conductive member 50 during charging and discharging. In this embodiment, the thickness T2 of the conductive member 50 is set to be less than or equal to 0.25 mm, thereby reducing the difficulty of bending the conductive member 50, reducing the space occupied by the conductive member 50 in the axial direction X, and increasing the energy density.

In some embodiments, the conductive member 50 is made of 1xxx series aluminum, and the current collecting disc 40 is made of 3xxx series aluminum or 5xxx series aluminum. With the conductive member 50 being made of 1xxx series aluminum that is of higher conductivity, lower strength, and higher flexibility, the conductive member 50 is less prone to fracture during bending, and the conductive member 50 generates less heat, thereby meeting the requirement of higher-rate discharge. The current collecting disc 40 is made of 3xxx series aluminum or 5xxx series aluminum, so that the Vickers hardness of the current collecting disc 40 is relatively high.

The Vickers hardness of the 1xxx series aluminum is typically in the range of 15 HV to 30 HV, the Vickers hardness of the 3xxx series aluminum is typically in the range of 30 HV to 60 HV, and the Vickers hardness of the 5xxx series aluminum is typically in the range of 60 HV to 120 HV.

In some embodiments, the current collecting disc 40 and the conductive member 50 are made of the same material. By using the same material for the current collecting disc 40 and the conductive member 50, this application reduces the difficulty of welding the first conductive portion 51 to the current collecting disc 40, and improves the welding quality.

In some embodiments, both the current collecting disc 40 and the conductive member 50 are made of 1xxx series aluminum.

In above embodiments, the thickness of the current collecting disc 40 is greater than the thickness of the conductive member 50. Increasing the thickness of the current collecting disc 40 can improve the current-carrying capacity of the current collecting disc 40, and increase the structural strength of the current collecting disc 40. During crimp-sealing, the thicker current collecting disc 40 can be less deformed when the protrusion 112 presses against the current collecting disc 40.

In some embodiments, the electrode assembly 20 is provided with a central hole 21. The current collecting disc 40 is provided with a second through-hole 44. The first conductive portion 51 is provided with a third through-hole 512. When the cylindrical battery is thermally runaway, the gas generated inside the electrode assembly 20 can be expelled through the central hole 21, the second through-hole 44, and the third through-hole 512, thereby reducing the risk of explosion of the cylindrical battery.

In some embodiments, in the axial direction X, at least a part of the second through-hole 44 is located between the central hole 21 and the third through-hole 512. The above positional arrangement can shorten the path of expelling the gas through the central hole 21, the second through-hole 44, and the third through-hole 512, thereby alleviating the problem that the conductive member 50 impedes internal gas flow and gas pressure transmission, increasing the gas exhausting rate, enabling the vent plate 33 and the rupture disc 32 to respond rapidly, and reducing the safety risk of the cylindrical battery.

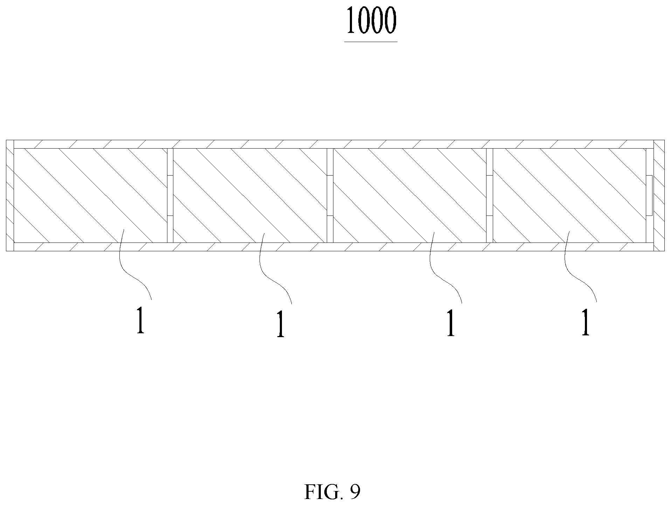

According to a second aspect of this application, referring to FIG. 9, this application further provides a battery module 1000. The battery module 1000 includes a plurality of cylindrical batteries 1 according to any embodiment of this application.

In some embodiments, the battery module 1000 further includes a plurality of busbars. The busbars are connected to the cylindrical batteries 1. At least two cylindrical batteries 1 may be connected in series or in parallel through the busbars.

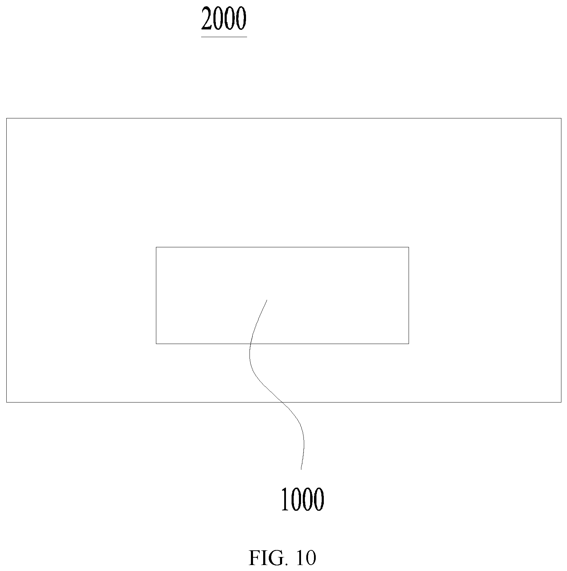

According to a third aspect of this application, referring to FIG. 10, this application further provides an electrical device 2000. The electrical device 2000 includes the cylindrical battery 1 according to any embodiment of this application. The cylindrical battery 1 can provide electrical energy for the electrical device 2000 in use.

The electrical device in an embodiment of this application may be a portable electronic device, a laptop computer, an electric toy, an unmanned aerial vehicle, an electric tool, an energy storage system, or the like. The electric tool may be a metal cutting electric tool, a cleaning tool, or the like, such as an electric drill, an electric wrench, a vacuum cleaner, or a robot cleaner. The electrical device is not particularly limited in this embodiment of this application.

Although this application has been described with reference to exemplary embodiments, various improvements may be made to the embodiments without departing from the scope of this application, and the components of this application may be replaced with equivalents. Particularly, to the extent that no structural conflict exists, various technical features mentioned in various embodiments may be combined in any manner. This application is not limited to the specific embodiments disclosed herein, but includes all technical solutions falling within the scope of the claims.

## Claims

1. A cylindrical battery (1), **characterized in that** the cylindrical battery (1) comprises:
a housing (10), comprising a sidewall (11), wherein the sidewall (11) comprises a sidewall body (111) and a protrusion (112), and the protrusion (112) protrudes from an inner surface of the sidewall body (111);
an electrode assembly (20), accommodated in the housing (10), wherein the sidewall body (111) surrounds the electrode assembly (20);
an end cap assembly (30), connected to the sidewall (11);
a current collecting disc (40), connected to the electrode assembly (20), wherein, in an axial direction of the cylindrical battery (1), a part of the current collecting disc (40) is located between the electrode assembly (20) and the protrusion (112); and
a conductive member (50), comprising a first conductive portion (51), a second conductive portion (52), and a bent portion (53), wherein the first conductive portion (51) is located on a side of the current collecting disc (40), the side facing the end cap assembly (30); the first conductive portion (51) is welded to the current collecting disc (40) to form a first weld portion (511); at least a part of the second conductive portion (52) is located between the first conductive portion (51) and the end cap assembly (30); the second conductive portion (52) is connected to the end cap assembly (30); and the bent portion (53) connects the first conductive portion (51) and the second conductive portion (52).

2. The cylindrical battery (1) according to claim 1, **characterized in that** in a radial direction of the cylindrical battery (1), the first weld portion (511) is spaced apart from an outer peripheral edge of the current collecting disc (40).

3. The cylindrical battery (1) according to claim 1 or 2, **characterized in that** the current collecting disc (40) is circular, and, in the axial direction, an outer peripheral edge of the current collecting disc (40) is located between the protrusion (112) and the electrode assembly (20); or
the current collecting disc (40) is a regular polygon, and, in the axial direction, each corner (41) of the current collecting disc (40) is located between the protrusion (112) and the electrode assembly (20).

4. The cylindrical battery (1) according to any one of claims 1 to 3, **characterized in that** the cylindrical battery (1) comprises an insulation member (60), the insulation member (60) comprises a first insulation portion (61) and a second insulation portion (62), the first insulation portion (61) surrounds the electrode assembly (20) and is bonded to the electrode assembly (20), the second insulation portion (62) is connected to an end portion, close to the end cap assembly (30), of the first insulation portion (61) and is bent relative to the first insulation portion (61); and
in the axial direction, a part of the current collecting disc (40) is located between the second insulation portion (62) and the electrode assembly (20), and a part of the second insulation portion (62) is located between the protrusion (112) and the current collecting disc (40).

5. The cylindrical battery (1) according to claim 4, **characterized in that**, in the axial direction, an orthographic projection of the second insulation portion (62) is spaced apart from an orthographic projection of the first weld portion (511).

6. The cylindrical battery (1) according to claim 4 or 5, **characterized in that** the protrusion (112) is in contact with the second insulation portion (62).

7. The cylindrical battery (1) according to any one of claims 1 to 6, **characterized in that** the current collecting disc (40) is welded to the electrode assembly (20) to form a plurality of second weld portions (42), and the plurality of second weld portions (42) are spaced apart along a circumferential direction of the cylindrical battery (1); and
in the circumferential direction, the first weld portion (511) is located between two adjacent second weld portions (42).

8. The cylindrical battery (1) according to claim 7, **characterized in that** the current collecting disc (40) is provided with a plurality of first through-holes (43); in the circumferential direction, each of the first through-holes (43) is located between two adjacent second weld portions (42), and no first through-hole (43) is provided between two second weld portions (42) adjacent to the first weld portion (511).

9. The cylindrical battery (1) according to claim 7 or 8, **characterized in that** an area of the first weld portion (511) is S1, a total area of the plurality of second weld portions (42) is S2, and 0.3 ≤ S1/S2 ≤ 2.5.

10. The cylindrical battery (1) according to any one of claims 1 to 9, **characterized in that** Vickers hardness of the current collecting disc (40) is greater than Vickers hardness of the conductive member (50).

11. The cylindrical battery (1) according to claim 10, **characterized in that** a thickness of the current collecting disc (40) is less than a thickness of the conductive member (50); optionally, the thickness of the current collecting disc (40) is 0.1 mm to 0.2 mm.

12. The cylindrical battery (1) according to any one of claims 1 to 11, **characterized in that** the conductive member (50) is made of 1xxx series aluminum, and the current collecting disc (40) is made of 3xxx series aluminum or 5xxx series aluminum.

13. The cylindrical battery (1) according to any one of claims 1 to 9, **characterized in that** a material of the current collecting disc (40) is identical to a material of the conductive member (50); optionally, a thickness of the current collecting disc (40) is greater than a thickness of the conductive member (50).

14. The cylindrical battery (1) according to any one of claims 1 to 13, **characterized in that** the electrode assembly (20) is provided with a central hole (21), the current collecting disc (40) is provided with a second through-hole (44), and the first conductive portion (51) is provided with a third through-hole (512); and
in the axial direction, at least a part of the second through-hole (44) is located between the central hole (21) and the third through-hole (512).

15. An electrical device (2000), **characterized in that** the electrical device (2000) comprises the cylindrical battery (1) according to any one of claims 1 to 14.
